# EUROPEAN PATENT SPECIFICATION

(11) **EP 0 598 448 B1**
(45) Date of publication and mention of the grant of the patent: **25.02.1998**
(21) Application number: 93203152.9
(22) Date of filing: 11.11.1993
(51) Int. Cl.: H04N 5/76, H04N 5/44, H04N 5/775

(54) **Arrangement for recording a videosignal on a record carrier and arrangement for displaying a video signal on a display device**
Anordnung zum Aufnehmen eines Videosignals auf einem Aufzeichnungsträger und Anordnung zum Anzeigen eines Videosignals auf einer Anzeigevorrichtung
Dispositif d'enregistrement d'un signal vidéo sur un support d'enregistrement et dispositif d'affichage d'un signal vidéo

(30) Priority: 17.11.1992 EP 92203519
(43) Date of publication of application: 25.05.1994
(73) Proprietor: Philips Electronics N.V., 5621 BA Eindhoven (NL)
(72) Inventor: van de Water, Cornelis, c/o INT. OCTROOIBUREAU BV, NL-5656 AA Eindhoven (NL)
(74) Representative: van der Kruk, Willem Leonardus

(56) References cited:
- EP-A- 0 400 745
- GB-A- 2 079 090
- PATENT ABSTRACTS OF JAPAN vol. 16, no. 312 (E-1230) 9 July 1992 & JP-A-04 087 484 (SONY CORP)
- PATENT ABSTRACTS OF JAPAN vol. 16, no. 154 (E-1190) 15 April 1992 & JP-A-04 008 066 (SHARP CORP)

## Description

The invention relates to an arrangement for recording a videosignal representing pictures having a first or a second aspect ratio (4:3, 16:9) on a record carrier, comprising
- a first terminal for receiving the videosignal for recording on the record carrier,
- recording means having an input coupled to the first terminal, for recording the videosignal on the record carrier,
- a second terminal for receiving in a recording mode of the arrangement a first or a second control signal (S1, S2) dependent of the videosignal received at the first terminal representing pictures of the first aspect ratio, or representing pictures of the second aspect ratio respectively,
- detection means having an input coupled to the second terminal, for detecting the first or the second control signal, so as to enable the recording of the videosignal representing pictures having the first or the second aspect ratio respectively on the record carrier. The invention also relates to an arrangement for displaying a videosignal representing pictures having a first or a second aspect ratio (4:3, 16:9) on a picture screen, comprising
- a first terminal for receiving the videosignal for display on the picture screen,
- display means having an input coupled to the first terminal, for displaying the videosignal on the picture screen,
- a second terminal for receiving a first or a second control signal (S1, S2) dependent of the videosignal received at the first terminal representing pictures of the first aspect ratio, or representing pictures of the second aspect ratio respectively,
- detection means having an input coupled to the second terminal, for detecting the first or the second control signal, so as to enable the display of the videosignal representing pictures having the first or the second aspect ratio respectively on the picture screen. Such arrangements are known from published European patent application 400,745A1.

The known arrangement can thus be in the form of a videorecorder and enables the recording and/or reproduction of a videosignal representing pictures having either the 4:3 or the 16:9 aspect ratio on/ from a magnetic record carrier, in response to the first or the second control signal respectively supplied to the arrangement via the second terminal.

Or, the known arrangement is in the form of a display arrangement having a picture screen for displaying a videosignal representing pictures having either the 4:3 or the 16:9 aspect ratio on the picture screen, in response to the first or the second control signal respectively supplied to the arrangement via the second terminal.

The videosignal to be recorded or displayed can be generated by a tuner, such as a MAC decoder. The MAC decoder further generates the first or the second control signal indicating the aspect ratio of the pictures included in the videosignal generated by the MAC decoder. The first control signal can be a DC voltage of zero Volts, indicating the 4:3 aspect ratio, and the second control voltage can be a DC voltage of 5 Volts, indicating the 16:9 aspect ratio. The control signals can be transmitted from the tuner, which can be included in a television apparatus, to the videorecorder or the display arrangement, if the last mentioned arrangement is not integrated with the tuner into one unit, via the line 8 of the SCART cable.

The invention aims at further improving the communication between the recording arrangement and a videosignal source, such as the MAC decoder, which can be included in a television apparatus.

In the same way, the invention aims at further improving the communication between the display arrangement and a videosignal source, such as the MAC decoder, which can be included in a television apparatus.

The recording arrangement according to invention is characterized in that, viewed in time, the second control signal is such that for repeated concatenations of a first and a second time interval, the second control signal is present during the first time interval (T1) and is absent during the subsequent second time interval (T2), that the detection means are adapted to detect the absence of the second control signal during a time interval which is longer than the second time interval so as to enable the arrangement to switch to a recording of a videosignal representing pictures having the first aspect ratio.

The display arrangement according to the invention is characterized in that, viewed in time, the second control signal is such that for repeated concatenations of a first and a second time interval, the second control signal is present during the first time interval (T1) and is absent during the subsequent second time interval (T2), that the detection means are adapted to detect the absence of the second control signal during a time interval which is longer than the second time interval so as to enable the arrangement to switch to a display of a videosignal representing pictures having the first aspect ratio.

The invention is based on the following recognition. The explanation that follows will be given based on the communication between a tuner and a videorecorder. The problem that will be described, is however equally present between the communication between a tuner and the display arrangement. Therefore, the solution that is proposed is equally applicable to the display arrangement.

Normally, the communication between the television apparatus and the videorecorder is such that, when both the television apparatus and the videorecorder supply a videosignal for display on a picture screen, the videosignal supplied by the videorecorder has priority over the videosignal from the internal tuner of the television apparatus, and the videorecorder output signal is displayed on the picture screen. The prior art document EP 400,745A1 has solved the problem of source selection and aspect ratio indication by proposing four different control signals on the line 8 in the SCART cable.

French patent application no. 92 07 737 (PHF 92-522) equivalent to EP-A-0 576 073, published 29/12/93, describes the communication between a television apparatus, more specifically the tuner in the television apparatus, and a videorecorder or a picture screen. In a situation where the television apparatus acts as a videosignal source, the tuner in the television apparatus supplies a videosignal representing pictures having either the first or the second aspect ratio, for recording in the videorecorder or for displaying on the picture screen. The first control signal in the unpublished French patent application indicating a video signal having an aspect ratio of 4:3 equals a DC voltage of zero Volts. The second control voltage, indicating a video signal having an aspect ratio of 16:9 is such that for repeated concatenations of a first and a second time interval, a DC voltage of 6 Volts is present during the first time intervals and is absent during the second time intervals. More specifically, the voltage during the second time intervals can be zero Volts for instance, or any other voltage below a certain threshold voltage, such as 2 Volts.

The second control signal thus now consists of signal components of 6 Volts, which were an indication in the European application 400 745 A1 that a videosignal having an aspect ratio of 16:9 was generated, and signal components of zero Volts, which are an indication that a videosignal having an aspect ratio of 4:3 is generated.

If the videorecorder is switched into a recording mode, it uses the control signal supplied by the television apparatus to switch itself to a recording mode of a 4:3 videosignal (if the first control signal of zero Volts is present on line 8 of the SCART cable) or to a recording mode of a 16:9 videosignal (if the second control signal is present on line 8). A problem now arises in that, if the television apparatus supplies a 16:9 videosignal, the videorecorder receives a 6 Volts signal during subsequent first time intervals and a zero Volts signal during subsequent second time intervals. This would mean that the videorecorder would cyclically switch over between the 4:3 recording mode and the 16:9 recording mode, which is of course unacceptable.

In order to preclude this cyclically switching between the 4:3 and the 16:9 recording mode, the detection means is now adapted to detect the absence of the second control signal during a time interval which is longer than the second time interval so as to enable the arrangement to switch to a recording of a videosignal representing pictures having the first aspect ratio. This means that, if the videorecorder is in the 16:9 recording mode, the detector means detects whether the control signal received via pin 8 of its SCART connector is zero Volts for a time interval longer than the second time interval. If not, then the videorecorder remains in its 16:9 recording mode. However, if the television apparatus switches over to supplying a video signal representing pictures having a 4:3 aspect ratio, the control signal generated by the television apparatus becomes zero Volts. The detector means in the videorecorder detects that the control signal is zero Volts for a time interval longer than the second time interval. Upon detection thereof, the videorecorder is switched into the 4:3 recording mode.

If the television apparatus switches over to the supply of a videosignal representing pictures having a 16:9 aspect ratio, the television apparatus starts generating the second control signal, which is the 6 Volts DC signal in the first time intervals and the absence of the 6 Volts DC signal in the intermediate second time intervals, in which the voltage can be zero Volts.

The detection means in the videorecorder detect the occurrence of the 6 Volts control signals during the first time intervals and the videorecorder can switch over to the 16:9 recording mode. This switching over to the 16:9 recording mode can be realized upon the detection of the 6 Volts DC signal occurring for the first time in a first time interval. The accuracy of detection can be improved by first detecting a 6 Volts control signal during a number of two or more subsequent first time intervals before switching over to the 16:9 recording mode. This makes the detection of the second control signal less sensitive to the occurrence of spurious signal spikes that are present on the line 8 of the SCART cable.

It will be understood that the problem of cyclically switching over between a recording of videosignals having a 4:3 and a 16:9 aspect ratio is in an alike form present in the display arrangement. In response to the alternating occurrence of the 6 Volts signal in the first time intervals and the zero Volts signal in the second time intervals, the display arrangement would cyclically switch between a 4:3 aspect ratio display mode and a 16:9 aspect ratio display mode, which is again unwanted. By detecting the presence and absence of the 6 Volts signal during the first and second time intervals respectively, in the way described above, a discrimination can be made between the aspect ratio of the videosignal supplied to the display arrangement.

These and other aspects of the invention will now be further explained with reference to the embodiments described in the following figure description, in which
figure 1 shows a first embodiment of the arrangement, switched in combination with a television apparatus,
figure 2 shows the second control signal which is supplied to the arrangement to indicate the video signal representing pictures having a 16:9 aspect ratio,
figure 3 shows in figure 3a the second control signal S2, and in figure 3b the sampling moments for sampling the value of the second control signal,
figure 4 shows an embodiment of the detector,
figure 5 shows the discrimination between a videosignal having an aspect ratio of 4:3 or an aspect ratio of 16:9, and
figure 6 shows an embodiment of the detection means for carrying out the discrimination.

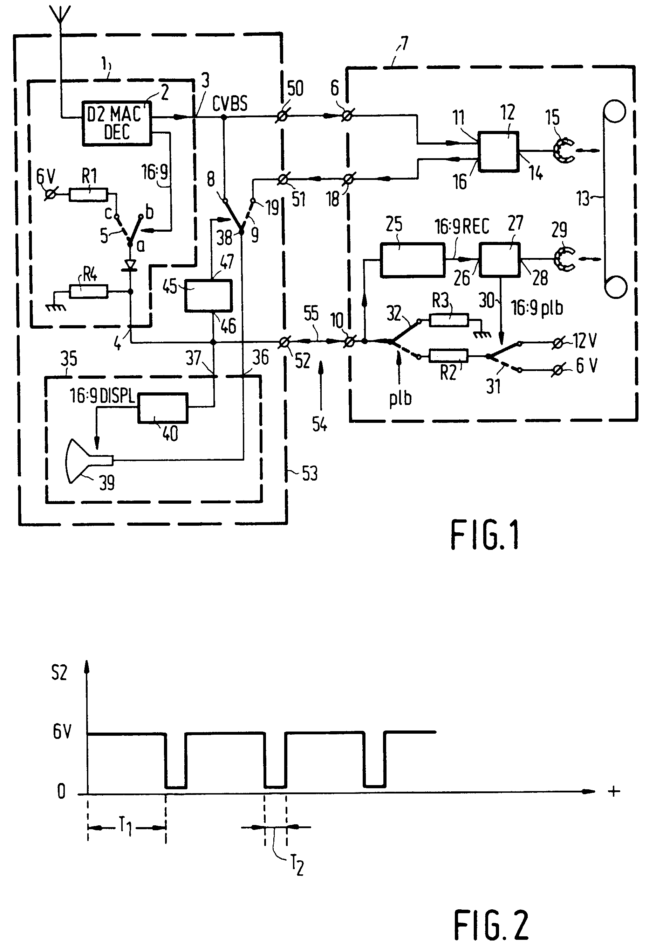

Fig. 1 shows a video tuner 1, for example equipped with a D2 MAC decoder 2, which is included in a television apparatus 53. The tuner 1 has a first output 3 and a second output 4. The video signal is supplied via the output 3. The video signal is made up of pictures having an aspect ratio of 4:3 or 16:9. The D2 MAC decoder receives D2 MAC signals and converts these video signal into CVBS (chroma-video-blanking-sync) signals. The aspect-ratio information is contained in the D2 MAC signals themselves. The tuner 1 extracts this information from the D2 MAC signal and, depending on whether the aspect ratio of the pictures in the video signals 4:3 or 16:9, the tuner 1 supplies a first control signal S1 or a second control signal S2 to its output 4. In the present example the first control signal S1 is a direct voltage signal having a d.c. amplitude in the voltage range from 0 V to 2 V. In the present example S1 is 0 V. The control signal S2 is shown in figure 2. During repeated occurrences of a first time interval T1 and a second time interval T2, the voltage signal at the output 4 has a first d.c. amplitude in the voltage range from 5 V to 7 V, more specifically 6 V, during the first time intervals and a second dc amplitude in the voltage range from 0 to 2 V, more specifically 0 V, in the second time intervals. For this purpose the tuner 1 comprises a switch 5 which is controlled by a switching signal generated by the D2 MAC decoder 2, which switching signal in fact indicates whether the pictures in the video signal supplied by the decoder 2 have an aspect ratio of 4:3 or 16:9. In the first-mentioned case the decoder 2 supplies such a switching signal to the switch 5, that this switch is in the position shown, that is the position a-b. The direct voltage on the output 4 is then 0 V, as the terminal a of the switch 5 is coupled to earth via a resistor R4 having a high impedance, such as 100 kOhm. In the other case the decoder 2 supplies such a control signal that the switch 5 recurrently occupies the position a-c during the first time intervals T1 and the positions a-b during the second time intervals T2. During the first time intervals, the output 4 is coupled to a direct voltage point at 6 V via the resistor R1 of, for example, 1 kohm. Now a direct voltage of 6 V appears on the output 4. The second control signal generated at the output 4 when a videosignal having the 16:9 aspect ratio is supplied at the output 3, is also described in the previously mentioned French patent application 92 07 737. The reason for generating such a control signal is also explained in the French patent application. Namely, in the second time intervals, when the 6V control signal is deconnected from the output 4, a detector 45 also present in the television apparatus 53, is capable of determining whether the voltage during the second time intervals is zero Volts or 6 Volts. In the first case, only the tuner supplies a videosignal having an aspect ratio of 16:9. In the second case, a video recorder (the later described videosignal recording and reproduction apparatus 7) which is connected to the television apparatus supplies a continuous 6 V control signal, indicating that it generates a video signal having an aspect ratio 16:9, for display on a picture screen included in the television apparatus. In the latter case, the videosignal supplied by the videorecorder has priority over the videosignal supplied by the tuner for display on the picture screen.

The output 4 of the tuner 1 is coupled to a terminal 52 of the television apparatus 53, which terminal 52 is coupled to a terminal 10 of a videosignal recording and reproducing arrangement 7. The output 3 of the tuner 1 is coupled to a first terminal 6 of a recording and reproducing arrangement 7 and to a first terminal 8 of switching means 9. The output 4 of the tuner 1 is coupled to a second terminal 10 of the arrangement 7. The terminal 6 is coupled to an input 11 of a read-write unit 12, in which the video signals are processed in such a way that they can be recorded on the record carrier 13.

Since in the present case the record carrier 13 takes the form of a magnetic tape the video signal processed by the unit 12 is applied to a read-write head 15 via the output 14 to record the video information on the record carrier 13. Recording can be effected in adjacent tracks which are inclined relative to the longitudinal direction of the record carrier 13. Such an arrangement is referred to as a helical-scan video recorder. The read-write unit 12 can also read the video information by means of the read-write head, the information thus read being supplied to an output 16. The output 16 is coupled to an output terminal 18 of the arrangement 7. The output 18 is coupled to a second terminal 19 of the switching means 9.

The terminal 10 is coupled to an input 26 of a read-write unit 27 via a detector 25. The output 28 of this unit 27 is coupled to a read-write head 29 or to the read-write head 15.

Depending on whether the signal to be recorded on the record carrier 13 is a 4:3 or a 16:9 video signal, a first or a second auxiliary signal is recorded on the record carrier, together with the associated video signal, by means of the read-write unit 27 and, as the case may be, the read-write head 29. This auxiliary signal may be recorded in a servo track already present on the record carrier, which servo track is situated at the edge of the record carrier and extends in the longitudinal direction of the record carrier. This first or second auxiliary signal will be generated by a detector 25 in response to the control signal applied to its input, which input is coupled to the terminal 10 of the arrangement. The functioning of the detector 25 will be explained later.

During reproduction the first or the second auxiliary signal is read and by means of the unit 27 it is applied to the switch 31 as a switching signal via the line 30. If the first auxiliary signal is read the switch 31 is in the position shown. If the second auxiliary signal is read the switch 31 is in the other position. Since during reproduction the switch 32 is set to the position not shown under the influence of the switching signal plb a control signal S3 is applied to the terminal 10 in the first-mentioned case (the first auxiliary signal is read). The control signal S3 is, for example, a direct voltage signal having a d.c. amplitude in a voltage range between 9.5 V and 12 V, more specifically S3 is 12 V. In the other case a control signal S4 is applied to the terminal 10. The control signal S4 is also a direct voltage signal and lies in a voltage range between 5 V and 7 V, more specifically S4 is 6 V. If the arrangement 7 is switched off, the switch 32 is in the position as shown, which means that the terminal 10 is coupled to ground via a resistor R3.

The television apparatus 53 further comprises a detector 45 having an input 46, coupled to the input 4 and the terminal 52, and having an output 47. The detector 45 comprises a comparator (not shown) and is capable of realizing a source selection in response to the control signals applied to its input, so as to position the switch 9 in either the position as shown, which means that the videosignal from the tuner is supplied to the picture screen 39, or in the other position, which means that the videosignal from the videorecorder 7 is supplied to the picture screen 39. Reference is made in this respect to the previously mentioned unpublished French patent application.

The television apparatus also comprises a picture display unit 35 having a first input 36 and a second input 37. The second output 4 of the tuner 1 and the terminal 10 of the arrangement 7 are both coupled to the input 37 of the unit 35. An output 38 of the switching means 9 is coupled to the input 36 of the unit 35. Video signals producing an aspect ratio of 4:3 or 16:9, applied to the input 36, are displayed on the display tube 39 of the unit 35.

In order to enable the video signals to be reproduced with the correct aspect ratio the unit 35 further comprises a detector 40. The functioning of the detector 40 will be explained later. At this moment it can be said that, in response to the control signals applied to the input of the detector 40, the detector 40 will supply such a control signal to the picture screen 39 that a videosignal representing pictures having an aspect ratio of either 4:3 or 16:9 is always displayed on the screen 39 with the correct aspect ratio. This means that if the television set has a display screen having an aspect ratio of 4:3 a video signal producing an aspect ratio of 4:3 will exactly fill the screen. A video signal producing an aspect ratio of 16:9 will be reproduced with a picture width equal to the width of the display screen but with a height smaller than the height of the display screen. This means that a black horizontal band will be formed at the top and the bottom of the picture. In the case of a picture screen having an aspect ratio of 16:9 a video signal producing an aspect ratio of 16:9 will exactly fill the screen. A video signal having an aspect ratio of 4:3 will produce a picture height equal to the height of the picture screen. The width is smaller than the width of the screen. Consequently, a black vertical band will be formed at both sides of the picture.

The combination operates as follows. The D2 MAC decoder 2 generates a video signal producing an aspect ratio of 4:3 or 16:9. The tuner 1 supplies the video signal to the terminal 8 of the switching means 9 via the output 3. Moreover, a first control signal
(S1 = 0 V because the switch 5 and the switch 32 are in the positions shown and because of the coupling to earth via the resistor R4) or a second control signal (S2 as per figure 2, because the switch 5 switches between the two positions) is generated on the output 4. The control signal S1 or S2 is applied to the detector 45 of the switching means 9, to the detector 25 in the videorecorder 7 and to the detector 40 of the picture display unit 40. The control signals S1 and S2 both ensure that the switching means 9 are set to the position shown, so that the video signal is applied to the input 36 of the picture display unit 35.

The video signal generated by the D2 MAC decoder 2 should be recorded on the record carrier 13 in the recording and reproducing arrangement 7. The video signal is normally applied to the input 11 of the read-write unit 12 via the terminals 3 and 6 and is recorded on the record carrier 13 by means of the head 15. The first or the second control signal is applied to the detector 25 via the terminal 10.

In the case of a videosignal having a 4:3 aspect ratio, a control voltage of 0 V is present at the terminal 10. The detector 25 can detect this voltage and generates the first auxiliary signal which is recorded on the record carrier, and the videosignal is recorded in the correct way on the record carrier.

In the case of a 16:9 videosignal, the detector receives the control signal as shown in figure 2. The detector 25 should decide that, although a signal of 0 V is present during the second time intervals T2, it should generate the second auxiliary signal for recording. Various embodiments of the detector 25 are possible so as to make the detector 25 insensitive to the 0 V signal during the second time intervals T2.

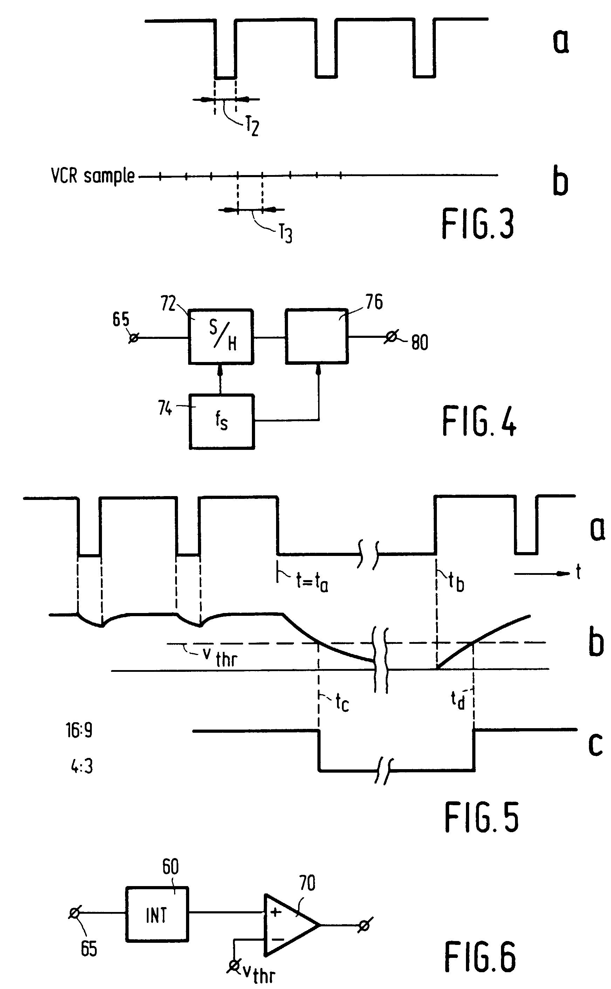

In one embodiment, the functioning of which is explained with reference to figure 3, the detector 25 includes a sampling unit (not shown), which samples the signal applied to its input with intervals T3, which are larger than T2. Suppose that T1 is larger than T2, that T2 is 30 ms and T3 is 50 ms. In that case two subsequent sample suffices to determine whether the control signal is 0 V, and thus to determine that the videosignal has an aspect ratio of 4:3. Further, three subsequent samples suffice to determine that the video signal has an aspect ratio of 16:9.

The most general requirement for the sampling frequency, in relation to the time intervals T1 and T2, is that the sampling frequency should be unequal to 1/(T1+T2). Because, in that case, the sampling moments could each time fall exactly within the second time intervals, so that an erroneous decision would be taken. Another requirement for the sampling frequency is that the decision time should not be too long. That is, the sampling frequency should not be too low. Therefore, preferably, the sampling frequency is larger than 1/(T1+T2), or larger than 1/T1, or even larger than 2/(T1+T2). If the sampling frequency lies near 1/(T1+T2), a number of subsequent samples can lie within subsequent second time intervals, before a sample falls within a first time interval. Therefore, the detection time is long. If the sampling frequency is larger than 2/(T1+T2), never two subsequent samples can fall within two subsequent second time intervals, so that the detection time can be shorter, namely twice the sampling time.

Figure 4 shows an embodiment of the detector unit 25 which is capable of carrying out the above described detection method. The detector comprises a sample-and-hold circuit 72, a sampling frequency generator 74 and a control signal generator 76, which has an output coupled to the output 80 of the detector. The generator 76 each time counts the number of subsequent sampled values that are larger than a threshold value, which is for instance 3 Volts. The generator 76 decides whether the first (S1) or the second (S2) control signal was applied to the input 65, and generates the first or the second auxiliary signal respectively.

Figure 5 and 6 show the functioning of another embodiment of the detector 25. Figure 6 shows the detector 25 comprising an integrator 60 and a comparator 70. The integrator 60 integrates the signal of figure 5a which is applied to the input terminal 65. During a certain time prior to t=tₐ, the second control signal, indicating a 16:9 videosignal, is applied to the integrator 60. The output signal of the integrator in response to this input signal is shown in figure 5b, and the corresponding output signal of the comparator 70 is shown in figure 5c. Prior to t=tₐ, the output signal of the comparator is 'high', which is the second auxiliary signal, and which indicates the presence of a 16:9 videosignal. At t=tₐ, the tuner starts generating a 4:3 videosignal. The signal of figure 5a becomes 0 V. The output signal of the integrator 60 now decreases, see figure 5b, until it passes the Vₜₕᵣ voltage, which is supplied to the inverting input of the comparator 70. Upon this moment, t=t_{c}, the output signal of the comparator 70 becomes 'low', which is the first auxiliary signal, indicating the presence of the 4:3 videosignal.

At t=t_{b}, the tuner starts supplying a 16:9 videosignal again. The output signal of the integrator 60 increases until it passes the threshold voltage vₜₕᵣ again at t=t_{d}. The output of the comparator 70 now generates the second auxiliary signal, which is a 'high' signal.

In the same way as described above for the videorecorder, depending on whether the control signal applied to the detector 40 is a first (S1) or a second (S2) control signal, the picture display unit 36 should display the applied video signal on the display screen 39 with an aspect ratio of 4:3 of 16:9. The detector 40 should therefore in the same way be capable of discriminating between the first and the second control signal, so that no cyclically switching over between a 4:3 aspect ratio display mode and a 16:9 aspect ratio display mode occurs in the case of receiving the control signal S2 as per figure 2. The detector 40 can therefore function in the same way as the detector 25 of the videorecorder, described above. This will especially be needed in the case that the display unit 35 and the tuner 1 are not integrated into one unit, so that the display unit 35 has no other way of receiving any other control signal from the tuner indicating the aspect ratio of the videosignal, than via the line 8 of the SCART cable.

## Claims

1. Videosignal recording arrangement for recording a videosignal representing pictures having a first or a second aspect ratio (4:3, 16:9) on a record carrier, comprising
- a first terminal for receiving the videosignal for recording on the record carrier,
- recording means having an input coupled to the first terminal, for recording the videosignal on the record carrier,
- a second terminal for receiving in a recording mode of the arrangement a first or a second control signal (S1, S2) dependent on the videosignal received at the first terminal representing pictures of the first aspect ratio, or representing pictures of the second aspect ratio respectively,
- detection means having an input coupled to the second terminal, for detecting the first or the second control signal, so as to enable the recording of the videosignal representing pictures having the first or the second aspect ratio respectively on the record carrier, characterized in that, viewed in time, the second control signal is such that for repeated concatenations of a first and a second time interval, the second control signal is present during the first time interval (T1) and is absent during the subsequent second time interval (T2),that the detection means are adapted to detect the absence of the second control signal during a time interval which is longer than the second time interval so as to enable the arrangement to switch to a recording of a videosignal representing pictures having the first aspect ratio.

2. Arrangement as claimed in claim 1, characterized in that, the detection means are further adapted to detect the occurrence of the second control signal so as to enable the arrangement to switch to a recording of a videosignal representing pictures having the second aspect ratio.

3. Videosignal display arrangement for displaying a videosignal representing pictures having a first or a second aspect ratio (4:3, 16:9) on a picture screen, comprising
- a first terminal for receiving the videosignal for display on the picture screen,
- display means having an input coupled to the first terminal, for displaying the videosignal on the picture screen,
- a second terminal for receiving a first or a second control signal (S1, S2) dependent on the videosignal received at the first terminal representing pictures of the first aspect ratio, or representing pictures of the second aspect ratio respectively,
- detection means having an input coupled to the second terminal, for detecting the first or the second control signal, so as to enable the display of the videosignal representing pictures having the first or the second aspect ratio respectively on the picture screen, characterized in that, viewed in time, the second control signal is such that for repeated concatenations of a first and a second time interval, the second control signal is present during the first time interval (T1) and is absent during the subsequent second time interval (T2), that the detection means are adapted to detect the absence of the second control signal during a time interval which is longer than the second time interval so as to enable the arrangement to switch to a display of a videosignal representing pictures having the first aspect ratio.

4. Arrangement as claimed in claim 3, characterized in that, the detection means are further adapted to detect the occurrence of the second control signal so as to enable the arrangement to switch to a display of a videosignal representing pictures having the second aspect ratio.

5. Arrangement as claimed in one of the preceding claims, characterized in that the detection means include an integrator.

6. Arrangement as claimed in one of the preceding claims, characterized in that the detection means comprise sampling means for sampling the control signal applied to the second terminal, the sampling frequency being larger than 1/(T1 + T2) , where T1 and T2 are the lengths of the first and the second time intervals respectively.

7. Arrangement as claimed in claim 1 or 3, characterized in that the second terminal is the pin 8 of a SCART connector, and is adapted to receive a signal present on line 8 of a SCART cable.

## Patentansprüche

1. Anordnung zum Aufzeichnen eines Videosignals, das Bilder mit einem ersten oder einem zweiten Seitenverhältnis (4:3, 16:9) darstellt, auf einem Aufzeichnungsträger, mit:
- einer ersten Klemme zum Empfangen des Videosignals zur Aufzeichnung auf dem Aufzeichnungsträger,
- Aufzeichnungsmitteln, von denen ein Eingang mit der ersten Klemme gekoppelt ist, zur Aufzeichnung des Videosignals auf dem Aufzeichnungsträger,
- einer zweiten Klemme zum in der Empfangsbetriebsart der Anordnung Empfangen eines ersten oder zweiten Steuersignals (S1, S2), je nach dem an der erstenKlemme empfangenen Videosignal, das Bilder mit dem ersten Seitenverhältnis darstellt, bzw. das Bilder mit dem zweiten Seitenverhältnis darstellt,
- Detektionsmitteln, von denen ein Eingang mit der zweiten Klemme gekoppelt ist zum Detektieren des ersten oder des zweiten Steuersignals, zur Ermöglichung der Aufzeichnung des Videosignals, das Bilder mit dem ersten bzw. zweiten Seitenverhältnis darstellt, auf dem Aufzeichnungsträger, dadurch gekennzeichnet, daß in der Zeit gesehen, das zweite Steuersignal derart ist, daß für wiederholte Kopplungen eines ersten und eines zweiten Zeitintervalls das zweite Steuersignal während des ersten Zeitintervall (T1) vorhanden ist und während des nachfolgenden zweiten Zeitintervalls (T2) fehlt, daß die Detektionsmittel das Fehlen des zweiten Steuersignals während eines Zeitintervalls detektieren, das länger ist als das zweite Zeitintervall, wodurch die Anordnung auf die Aufzeichnung eines Videosignals umschalten kann, das Bilder mit dem ersten Seitenverhältnis darstellt.

2. Anordnung nach Anspruch 1, dadurch gekennzeichnet, daß die Detektionsmittel weiterhin das Auftreten des zweiten Steuersignals detektieren, wodurch die Anordnung auf ein Aufzeichnungssignal umschalten kann, das Bilder mit dem zweiten Seitenverhältnis darstellt.

3. Videosignalwiedergabeanordnung zum Wiedergeben eines Videosignals, das Bilder mit einem ersten oder einem zweiten Seitenverhältnis (4:3, 16:9) darstellt, an einem Bildschirm,
mit:
- einer ersten Klemme zum Empfangen des Videosignals zur Wiedergabe an dem Wiedergabeschirm,
- Wiedergabemitteln, von denen ein Eingang mit der ersten Klemme gekoppelt ist, zur Wiedergabe des Videosignals an dem Bildschirm,
- einer zweiten Klemme zum Empfangen eines ersten oder eines zweiten Steuersignals (S1, S2), je nach dem empfangenen Videosignal, an der ersten Klemme, das Bilder mit dem ersten Seitenverhältnis darstellt, oder Bilder mit dem zweiten Seitenverhältnis darstellt,
- Detektionsmitteln, von denen ein Eingang mit der zweiten Klemme gekoppelt ist, zum Detektieren des ersten oder des zweiten Signals, zur Ermöglichung der Wiedergabe des Videosignals, das Bilder mit dem ersten oder dem zweiten Seitenverhältnis darstellt, an dem Bildschirm,
dadurch gekennzeichnet, daß in der Zeit gesehen, das zweite Steuersignal derart ist, daß für wiederholte Kopplungen eines ersten und eines zweiten Zeitintervalls das zweite Steuersignal während des ersten Zeitintervalls (T1) vorhanden ist und während des nachfolgenden zweiten Zeitintervalls (T2) fehlt, daß die Detektionsmittel das Fehlen des zweiten Steuersignals während eines Zeitintervalls detektiert, das länger ist als das zweite Zeitintervall, wodurch die Anordnung auf eine Wiedergabe eines Videosignals umschalten kann, das Bilder mit dem ersten Seitenverhältnis darstellt.

4. Anordnung nach Anspruch 3, dadurch gekennzeichnet, daß die Detektionsmittel weiterhin das Auftreten des zweiten Steuersignals detektieren, wodurch es möglich ist, auf eine Wiedergabe eines Videosignals umzuschalten, das Bilder mit dem zweiten Seitenverhältnis darstellt.

5. Anordnung nach einem der vorstehenden Ansprüche, dadurch gekennzeichnet, daß die Detektionsmittel einen Integrator aufweisen.

6. Anordnung nach einem der vorstehenden Ansprüche, dadurch gekennzeichnet, daß die Detektionsmittel Abtastmittel aufweisen zum Abtasten des der zweiten Klemme zugeführten Steuersignals, wobei die Abtastfrequenz höher ist als 1/(T1+T2), wobei T1 und T2 die Längen des ersten bzw. zweiten Zeitintervalls ist.

7. Anordnung nach Anspruch 1 oder 3, dadurch gekennzeichnet, daß die zweite Klemme der Stift 8 eines SCART-Steckers ist und ein an der Leitung 8 eines SCART-Kabels vorhandenes Signal erhält.

## Revendications

1. Dispositif d'enregistrement du signal vidéo pour enregistrer un signal vidéo représentant des images ayant un premier rapport largeur:hauteur ou un deuxième rapport largeur:hauteur (4:3, 16:9) sur un support d'enregistrement, comprenant
- une première borne pour recevoir le signal vidéo à enregistrer sur le support d'enregistrement,
- des moyens d'enregistrement ayant une entrée couplée à la première borne, pour enregistrer le signal vidéo sur le support d'enregistrement,
- une deuxième borne pour recevoir, dans un mode d'enregistrement du dispositif, un premier ou un deuxième signal de commande (S1, S2) dépendant du signal vidéo reçu à la première borne représentant des images du premier rapport largeur:hauteur, ou représentant des images du deuxième rapport largeur:hauteur, respectivement,
- des moyens de détection ayant une entrée couplée à la deuxième borne, pour détecter le premier ou le deuxième signal de commande, de manière à permettre l'enregistrement du signal vidéo représentant des images ayant le premier ou le deuxième rapport largeur:hauteur, respectivement, sur le support d'enregistrement, caractérisé en ce que, vu dans le temps, le deuxième signal de commande est tel que, pour des concaténations répétées d'un premier et d'un deuxième intervalles de temps, le deuxième signal de commande est présent pendant le premier intervalle de temps (T1) et est absent pendant le deuxième intervalle de temps suivant (T2) subséquent, que les moyens de détection sont à même de détecter l'absence du deuxième signal de commande pendant un intervalle de temps qui est plus long que le deuxième intervalle de temps, afin de permettre au dispositif de commuter vers un enregistrement d'un signal vidéo représentant des images ayant le premier rapport largeur:hauteur.

2. Dispositif suivant la revendication 1, caractérisé en ce que les moyens de détection sont en outre à même de détecter l'apparition du deuxième signal de commande afin de permettre au dispositif de commuter vers un enregistrement d'un signal vidéo représentant des images ayant le deuxième rapport largeur:hauteur.

3. Dispositif d'affichage d'un signal vidéo pour afficher un signal vidéo représentant des images ayant un premier ou un deuxième rapport largeur:hauteur (4:3, 16:9) sur un écran vidéo, comprenant
- une première borne pour recevoir le signal vidéo à afficher sur l'écran vidéo,
- des moyens d'affichage ayant une entrée couplée à la première borne, pour afficher le signal vidéo sur l'écran vidéo,
- une deuxième borne pour recevoir un premier ou un deuxième signal de commande (S1, S2) dépendant du signal vidéo reçu à la première borne représentant des images du premier rapport largeur:hauteur, ou représentant des images du deuxième rapport largeur:hauteur, respectivement,
- des moyens de détection ayant une entrée couplée à la deuxième borne, pour détecter le premier ou le deuxième signal de commande, de manière à permettre l'affichage du signal vidéo représentant des images ayant le premier ou le deuxième rapport largeur:hauteur, respectivement, sur l'écran vidéo, caractérisé en ce que, vu dans le temps, le deuxième signal de commande est tel que, pour des concaténations répétées d'un premier et d'un deuxième intervalles de temps, le deuxième signal de commande est présent pendant le premier intervalle de temps (T1) et est absent pendant le deuxième intervalle de temps (T2) subséquent, que les moyens de détection sont à même de détecter l'absence du deuxième signal de commande pendant un intervalle de temps qui est plus long que le deuxième intervalle de temps de manière à permettre au dispositif de commuter vers un affichage d'un signal vidéo représentant des images ayant le premier rapport largeur:hauteur.

4. Dispositif suivant la revendication 3, caractérisé en ce que les moyens de détection sont en outre à même de détecter l'apparition du deuxième signal de commande de manière à permettre au dispositif de commuter vers un affichage d'un signal vidéo représentant des images ayant le deuxième rapport largeur:hauteur.

5. Dispositif suivant l'une quelconque des revendications précédentes, caractérisé en ce que les moyens de détection comprennent un intégrateur.

6. Dispositif suivant l'une quelconque des revendications précédentes, caractérisé en ce que les moyens de détection comprennent des moyens d'échantillonnage pour échantillonner le signal de commande appliqué à la deuxième borne, la fréquence d'échantillonnage étant plus grande que 1/(T1+T2), où T1 et T2 sont les longueurs du premier et du deuxième intervalles de temps, respectivement.

7. Dispositif suivant la revendication 1 ou 3, caractérisé en ce que la deuxième borne est la broche 8 d'un connecteur SCART, et est à même de recevoir un signal présent sur la ligne 8 d'un câble SCART.
